# EUROPEAN PATENT APPLICATION

(11) **EP 1 346 914 A2**
(43) Date of publication of application: **24.09.2003**
(21) Application number: 02020350.1
(22) Date of filing: 12.09.2002
(51) Int. Cl.: B64D 13/06

(54) **High efficiency air conditioning system for enclosures, in particular for aircraft cabins**

(30) Priority: 19.03.2002 IT MI20020146 U
(71) Applicant: Grassi, Sergio, 21042 Caronno Pertusella (Varese) (IT)
(72) Inventor: Grassi, Sergio, 21042 Caronno Pertusella (Varese) (IT)
(74) Representative: Ripamonti, Enrico, Dr. Ing.

(57) **Abstract**

An air conditioning system for an enclosure, such as the cabin of an aircraft when at rest in an airport, comprises a circuit (1) into which air is fed, said circuit (1) comprising a heat exchanger (10) connected to a compressor (9) connected via a conduit (22) to an expansion turbine (12) from which a conduit (31) extends directed to the enclosure to be cooled, the compressor (9) and turbine (12) being mechanically connected together to define a turbocompressor unit (14). The air circulating through the circuit (1) is compressed air, the turbocompressor unit (14) having an efficiency exceeding 65% and being of automotive derivation.

## Description

The present invention relates to an air conditioning system for an enclosure, in accordance with the introduction to the main claim.

Various cooling systems for enclosures are known. With particular reference to enclosure air conditioning systems without refrigerant gas such as a chlorofluorocarbon-based gas, systems of this type have been known for many years. Their main use is in jet aircraft where they are used to air-condition the pilots' cabin and passenger compartment. In an aircraft, a system of the stated type operates without refrigerant gas by using air as the refrigerant fluid. This system comprises a conduit which withdraws pressurized air from a stage of an aircraft turbine; the air passes through a heat exchanger which lowers its temperature and, via a suitable conduit, reaches a compressor with a turbine keyed onto its exit shaft. The turbine is also connected to said compressor via a conduit through which the air withdrawn from this latter circulates and which is connected to a further heat exchanger to lower the temperature of this air. The air expands through the turbine and undergoes cooling; the cold air then passes through a conduit connected to the cabin, with the result that this latter is cooled.

When the aircraft is on the ground in an airport, environmental regulations prohibit running of the engines. Consequently the aforesaid system cannot operate and the cabin cannot be air conditioned. For this reason, suitable air conditioning units mounted on trucks or on motorized supports condition the air within the aircraft. These units comprise an actual refrigeration circuit in which the motor-driven compressor is powered electrically or by fuel such as diesel oil or the like. Hence these units also cause environmental pollution, due both to the exhaust from the fuel-operated engine and to the noise generated thereby during its operation. Moreover the efficiency of the refrigeration circuit of said unit is low, of the order of 25-30%.

An object of the present invention is therefore to provide an improved system for air conditioning an enclosure, said system using air as the refrigerant gas and hence being advantageously economical compared with similar known air conditioning systems, while having virtually no environmental impact.

Another object is to provide an air conditioning system of the stated type which is of high efficiency, reliability and low maintenance costs.

A further object is to provide an air conditioning system of the stated type having a small number of components, said components being able to be replaced when necessary, without the need to salvage any refrigerant fluid.

These and further objects which will be apparent to the expert of the art are attained by an air conditioning system for an enclosure in accordance with the accompanying claims.

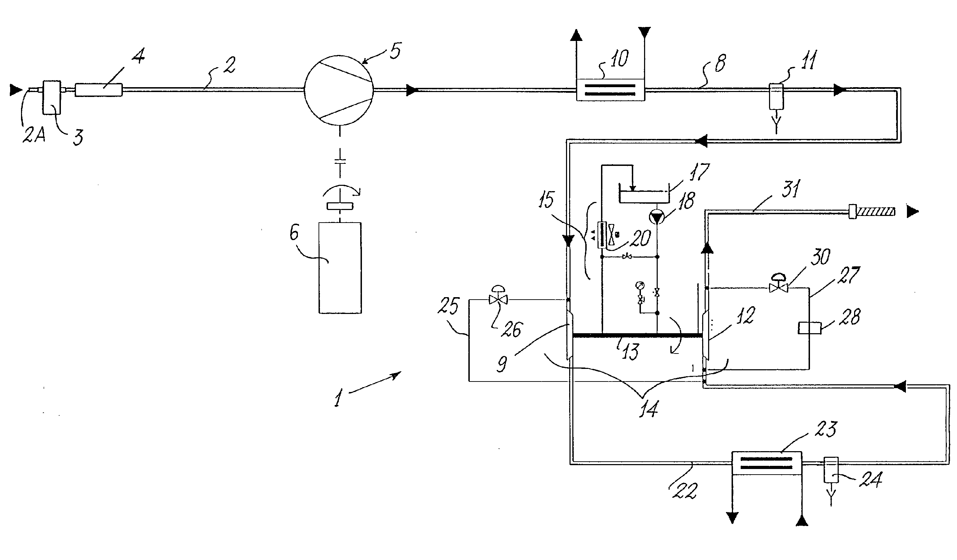

The present invention will be more apparent from the accompanying drawing, which is provided by way of non-limiting example and which represents an air conditioning system in accordance with the invention.

With reference to said figure, the air conditioning system comprises a circuit indicated overall by 1 and presenting an entry conduit 2 through whose aperture 2A the air is fed into the system. An air filter 3 and a silencer 4 are connected into the conduit 2. The conduit 2 terminates in a compression member 5, for example a lobed blower, driven by its own electric motor or internal combustion engine 6; this compression member compresses the entry air (withdrawn from atmosphere in the example) and feeds it through a conduit 8 directed to a turbo-compressor 9. A heat exchanger 10 (for example of air/air type) and a condensate separator 11 are connected into the conduit 8. The compressor is connected mechanically to an expansion turbine 12 via a rotary shaft 13, said compressor, turbine and shaft defining a turbo-compressor unit 14. According to the invention, the turbo-compressor unit 14 is of automotive derivation (i.e. it is of the type used on internal combustion engines), even though it operates in the exactly opposite manner to that of an internal combustion engine vehicle, as will be described. The efficiency of the unit 14 exceeds 65% as it is the energy of the turbine which rotates the shaft on which the compressor is keyed.

A circuit 15 is provided for lubricating the rotary shaft 13, said circuit comprising a lubrication tank 17 from which the lubricant fluid is withdrawn by the pump 18; the fluid is fed to the shaft 13 (in known manner, not shown) and is returned to the tank 17 after cooling through a suitable known heat exchanger 20. This circuit is provided with other known members (such as valves) shown in the figures, but not described.

The compressor 9 is also connected to the expansion turbine 12 via a conduit 22 into which an air/air heat exchanger 23 and a condensate separator 24 are connected. This compressor can however be bypassed by a bypass conduit 25 which directly connects the compressor entry conduit 8 to the conduit 22 in order to bypass the compressor 9. A control valve 26 is connected into the bypass 25.

A further bypass conduit 27 is present at the expansion turbine 12; this is connected to a member 28 for controlling the temperature of the air entering the turbine and contains a control valve 30. The bypass conduit 27 connects the entry conduit of the turbine 12 to an exit conduit 31 from this latter and directed to the enclosure to be air conditioned, for example to be cooled, such as a domestic room or, preferably, the interior of an aircraft which this is at rest in an airport.

In using the circuit 1, for example to cool the passenger compartment of an aircraft, the circuit 1, for example mounted on a suitable mobile support or truck, is brought close to the aircraft and the conduit 31 is connected to a usual air inlet to the compartment. The motor 6 is then started and begins to draw air from the enclosure (at a temperature T = 20°C, for example) through the aperture 2A of the conduit 2. The system can however operate with environmental air at a temperature between -30°C and +50°C. This air is compressed by the member 5 to hence attain for example a temperature of 150°C. After passing through the heat exchanger 10, the temperature of the air falls for example to 70°C and the air is fed to the turbocompressor unit 14. When starting the system, the valve 26 is opened so that the air passes through the bypass conduit 25 to directly reach the expansion turbine 12, so avoiding pressure drop at the compressor. The compressed air rotates the turbine 12 and hence also starts the turbocompressor 9 by virtue of the connection between this latter and the turbine via the shaft 13. The turbine causes the air to expand and hence undergo cooling; the turbine 12 then forces the air through the conduit 31 and from there into the enclosure to be cooled. After the necessary starting transient, the valve 26 is closed and the compressed air passes from the conduit 8 to the compressor 9. In this case, in the example under consideration, the temperature of the air through the conduit 22 rises, from the 70°C in the conduit 8, to 120°C to again fall to 70°C after passing through the heat exchanger 23. The air expands through the turbine 12 and passes to a much lower temperature close to 4°C. From here, considerably cooled with respect to the air in the enclosure, the air is fed into the enclosure to be air conditioned.

As will be apparent, although the turbocompressor unit 14 is of automotive type it operates differently from its operation in a motor engine: in the present case the compressor 9 is driven by the air entering the turbine 12 which feeds the cooled air into the enclosure to be air conditioned.

As an alternative to the described solution, the system of the invention is without the compression member 5, and the conduit 2 feeds compressed air from an air receiver or from a compressed air circuit external to the system.

By virtue of the invention an air conditioning system is obtained which is of high efficiency, simple construction, low cost and reliable use. As it does not use refrigerant gases, the system of the invention respects the environment and is very safe: any leakage would result only in the release of air from the circuit 1, without any collateral damage. Moreover, if work needs to be done on the system, it can be done at any moment in a very short time, without the need to empty the conduits 8, 25, 22, 27 or 31.

In addition, as refrigerant gases are not utilized, the use of the circuit 1 does not require storage of any refrigerant gas for its filling or make-up; finally, its maintenance does not require a specialized technician.

## Claims

1. An air conditioning system for an enclosure, such as the cabin of an aircraft when at rest in an airport, comprising a circuit (1) into which air is fed, said circuit (1) comprising a heat exchanger (10) connected to a compressor (9) connected via a conduit (22) to an expansion turbine (12) from which a conduit (31) extends directed to the enclosure to be cooled, the compressor (9) and turbine (12) being mechanically connected together to define a turbocompressor unit (14), **characterised in that** the air circulating through the circuit (1) is compressed air, the turbocompressor unit (14) having an efficiency exceeding 65%.

2. An air conditioning system as claimed in claim 1, **characterised in that** the turbocompressor unit (14) is of automotive derivation.

3. An air conditioning system as claimed in claim 1, **characterised in that** the compressed air is withdrawn from a compressed air receiver.

4. An air conditioning system as claimed in claim 1, **characterised in that** the compressed air is withdrawn from a compressed air unit or circuit external to the system and separate from the circuit (1) of the air conditioning system.

5. An air conditioning system as claimed in claim 1, **characterised in that** the air is withdrawn from an environment external to the enclosure to be air conditioned, said air being compressed by a component compression member (5) of the air conditioning system.

6. An air conditioning system as claimed in claim 1, **characterised by** comprising at least one heat exchanger (10) to which the air arrives before reaching the turbocompressor unit, a condensate separator (11) being provided between said unit (14) and said heat exchanger (10).

7. An air conditioning system as claimed in claim 1, **characterised by** comprising, in correspondence with the compressor (9) of the turbocompressor unit (14), a bypass conduit (25) arranged to receive compressed air on starting the system, said air bypassing the compressor (9) during said starting, said bypass conduit (25) connecting an air entry conduit (8) of the compressor (9) to an entry conduit (22) of the expansion turbine (12).

8. An air conditioning system as claimed in claim 1, **characterised by** comprising a conduit (27) bypassing the expansion turbine (12), in said conduit there being positioned a member for measuring the temperature of the air passing through the turbine.

9. An air conditioning system as claimed in claim 1, **characterised in that** a heat exchanger (23) and a condensate separator are present between the compressor (9) and the expansion turbine.

10. An air conditioning system as claimed in claim 1, **characterised in that** the compressor (9) is keyed onto a shaft (13) connected to the expansion turbine (12), said shaft being lubricated.
